# FASCICULE DE BREVET EUROPEEN

(11) **EP 2 846 949 B1**
(45) Date de publication et mention de la délivrance du brevet: **25.07.2018**
(21) Numéro de dépôt: 13727271.2
(22) Date de dépôt: 07.05.2013
(51) Int. Cl.: B22F 3/105, B23K 26/34

(54) **PROCEDE DE RECHARGEMENT DE PIECES METALLIQUES POUR TURBOREACTEURS D'AERONEFS, ET OUTILLAGE DE PROTECTION LOCALE POUR LA MISE EN OEUVRE DU PROCEDE**
REPARATURVERFAHREN FÜR METALLTEILE VAN STRAHLTURBINEN FÜR FLUGZEUGE UND SCHUTZEINRICHTUNG ZUR AUSFÜHRUNG DES GENANNTEN VERFAHRENS
REPAIR METHOD FOR METALLIC PIECES FOR TURBOJETS OF AIRCRAFTS AND PROTECTION DEVICE FOR CARRYING OUT SAID METHOD

(30) Priorité: 09.05.2012 FR 1254191
(43) Date de publication de la demande: 18.03.2015
(73) Titulaire: Safran Aircraft Engines, 75015 Paris (FR)
(72) Inventeur: MOTTIN, Jean-Baptiste, F-77550 Moissy-Cramayel Cedex (FR)
(74) Mandataire: Cabinet Camus Lebkiri
(86) Numéro de dépôt international: PCT/FR2013/051016
(87) Numéro de publication internationale: WO 2013/167841

(56) Documents cités:
- US-A1- 2011 217 457
- US-B1- 6 326 585

## Description

### DOMAINE TECHNIQUE DE L'INVENTION

La présente invention concerne un procédé de rechargement de pièces métalliques pour turboréacteurs d'aéronefs. Elle concerne également un outillage spécifique assurant une protection locale des pièces métalliques à recharger par le procédé selon l'invention.

Le domaine technique de l'invention est donc, d'une façon générale, celui des moteurs d'aéronef, et plus particulièrement celui de la réparation par un procédé de rechargement de certaines pièces métalliques des moteurs d'aéronefs.

Sans être limitatif, la pièce métallique considérée est avantageusement par exemple une pale d'un disque aubagé monobloc, ou encore toute pièce présentant un bord de fuite et/ou un bord d'attaque, par exemple des aubes de turbine basse pression. Dans la pratique, l'invention concerne toute pièce métallique de turboréacteur d'aéronef présentant une partie, notamment une extrémité, nécessitant une opération de rechargement, c'est à dire de réparation par reconstitution d'une forme appropriée de la pièce considérée, par un procédé du type réparation TIP. Les procédés du type réparation TIP utilisent un procédé de projection laser dirigé (ou un faisceau d'électrons dirigé), opérant une fusion sélective de poudre (procédé connu notamment sous les appellations "Laser cladding", ou "laser metal déposition" en langue anglaise), qui permet, par passage successif d'un laser sur un dépôt de poudre, de reconstituer la pièce considérée.

Les pièces métalliques qui sont avantageusement concernées par l'invention sont celles présentant un risque d'oxydation lors de l'opération de rechargement ; il en est ainsi des pièces métalliques comportant du titane, mais aussi du nickel, de l'aluminium, ou encore du cobalt. Pour de telles pièces, il est en effet nécessaire, afin d'empêcher une quelconque détérioration des caractéristiques mécaniques de la pièce considérée, d'empêcher toute oxydation de ladite pièce.

### ARRIERE PLAN TECHNOLOGIQUE DE L'INVENTION

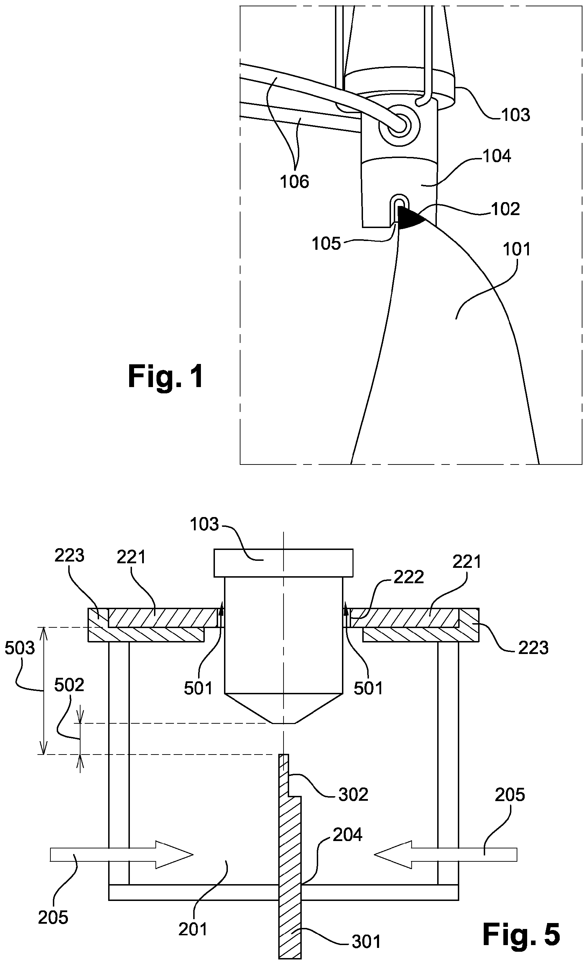

Dans l'état de la technique, on a proposé plusieurs solutions pour procéder à de telles opérations de rechargement laser dans le but de réparer certaines pièces métalliques. On a notamment proposé l'utilisation de cabines de taille importante créant un espace soit rempli de gaz neutre, soit dans lequel le vide est fait, dans lequel sont introduits la pièce à recharger et tout l'équipement intervenant pour le rechargement ; mais une telle solution est coûteuse, et lente à mettre en oeuvre, du fait des grandes quantités de gaz inertes introduites dans la cabine considérée. Une autre solution proposée dans l'état de la technique est illustrée à la figure 1. Sur cette figure, on a représenté une pale 101 dont une extrémité 102 a été endommagée et doit faire l'objet d'un rechargement par fusion laser. A cet effet, on utilise une buse 103, émettant un faisceau laser, ou plus généralement un faisceau d'électrons, destiné à faire entrer en fusion une poudre en vue du rechargement de l'extrémité 102.

Dans le procédé de l'état de la technique illustré au moyen de la figure 1, on a disposé une enceinte de protection 104 à l'extrémité de la buse 103. L'enceinte de protection 104 présente une extrémité inférieure avec une encoche 105 globalement en forme de U inversé, encoche 105 dans laquelle vient s'insérer l'extrémité 102 à recharger. Le volume intérieur de l'encoche 105 est vidé de son oxygène par l'envoi d'un gaz neutre, par exemple de l'argon ou de l'hélium, par des tuyaux 106 reliés à la buse 103 ; le rechargement de l'extrémité 102 peut ainsi être effectué sans phénomène d'oxydation. Dans un tel exemple, on utilise donc un gaz provenant de la buse comme protection locale de la zone à reconstruire.

Cependant, un tel procédé n'est pas satisfaisant pour recharger l'extrémité 102 sur une distance significative de quelques centimètres. Or l'extrémité 102 de la pale 101 est courbe, et le déplacement en translation auquel est limité la buse 103 empêche l'enceinte de protection de se déplacer sur cette distance significative. En effet, l'encoche 105, afin de pouvoir assurer son remplissage par un gaz neutre, et pour que l'enceinte de protection 104 puisse s'insérer entre la pale 101 et les pales voisines - non représentées - doit avoir une dimension limitée. Une telle limitation de ces dimensions a pour conséquence que les parois de l'encoche 105 sont proches l'une de l'autre, et entrent rapidement en contact avec l'extrémité 102, empêchant en conséquence la possibilité de rechargement sur la totalité de l'extrémité 102 à recharger.

US 6 326 585 et US 2011/217457 divulguent des méthodes de réparation de pièces métalliques pour turboréacteurs d'aéronefs utilisant un procédé de projection laser dirigé.

### DESCRIPTION GENERALE DE L'INVENTION

L'objet de l'invention offre une solution aux problèmes qui viennent d'être exposés, en proposant un procédé et un outillage, peu onéreux, de protection locale pour le rechargement de pièces métalliques qui autorise un mouvement en translation important de la buse afin de pouvoir atteindre la totalité d'une zone à recharger, ledit outillage n'étant pas trop encombrant afin de ne pas être gêné par la présence de pièces, par exemple des pales, voisines. A cet effet, on prévoit notamment de rendre l'enceinte de protection non solidaire de la buse émettant le faisceau laser. Afin de limiter les pertes en gaz neutres introduits dans l'enceinte, on prévoit également un moyen de fermeture supérieur de l'enceinte, ledit moyen de fermeture n'entravant pas le mouvement de la buse, et assurant une isolation suffisante pour que la présence de gaz neutre empêche effectivement l'oxydation de la pièce durant le rechargement ; l'isolation assurée évite que le gaz neutre ne s'échappe trop rapidement de l'enceinte pour y être remplacé par l'oxygène ambiant, et provoquer le phénomène d'oxydation décrit.

Ainsi, dans l'invention, pour éviter d'utiliser une cabine entière, comprenant la pièce à recharger et l'équipement supportant la buse, sous gaz neutre, on utilise un outillage de protection locale monté sur la pale à recharger. Cet outillage permet d'avoir une zone inerte tout autour de la pièce, et d'empêcher toute oxydation durant le rechargement.

A cet outillage, est couplé un couvercle mobile épousant la forme de l'outillage tout au long du rechargement qui est mis en mouvement par la buse de projection gazeuse.

L'invention concerne ainsi essentiellement un procédé de rechargement de pièces métalliques pour turboréacteur d'aéronef, ledit procédé faisant intervenir une buse émettant un faisceau laser, ou un faisceau d'électrons, destiné à chauffer une poudre projetée sur la pièce assurant le rechargement de ladite pièce métallique, caractérisé en ce que ledit procédé comporte les différentes étapes suivantes :
- mise en position de la pièce métallique à recharger dans une enceinte présentant une partie supérieure avec une ouverture ;
- mise en place d'un couvercle mobile recouvrant l'ouverture de la partie supérieure, ledit couvercle mobile présentant un orifice ;
- positionnement de la buse au niveau de l'orifice du couvercle mobile ;
- introduction d'un gaz inerte dans l'enceinte ;
- projection de poudres métalliques et émission du laser assurant le rechargement de la pièce métallique ;
- déplacement de la buse par rapport à l'enceinte, selon une trajectoire de rechargement de la pièce métallique, le déplacement de la buse provoquant le déplacement du couvercle mobile sur la face supérieure de l'enceinte.

Outre les caractéristiques principales qui viennent d'être mentionnées dans le paragraphe précédent, le procédé selon l'invention peut présenter une ou plusieurs caractéristiques complémentaires parmi les suivantes, considérées individuellement ou selon les combinaisons techniquement possibles :
- le déplacement du couvercle mobile est provoqué par la buse en contact avec un renforcement de l'orifice du couvercle recouvrant la partie supérieure.
- la partie supérieure supporte des rails de guidage, le déplacement du couvercle mobile étant guidé par les rails de guidage.
- le procédé comporte l'étape supplémentaire consistant à, préalablement à l'étape de mise en place du couvercle mobile, mettre en place les rails de guidage sur la partie supérieure de l'enceinte.
- l'étape de mise en position de la pièce métallique à recharger dans l'enceinte comporte une opération d'introduction, par une ouverture ménagée dans une partie inférieure de l'enceinte, de ladite pièce métallique.
- la trajectoire de rechargement de la pièce métallique comporte plusieurs allers-retours, la buse présentant une distance de rechargement par rapport à la pièce métallique variant au fur et à mesure des allers-retours.
- la distance de rechargement varie de trois millimètres à trente millimètres.

La présente invention se rapporte également à un outillage, apte à mettre en oeuvre le procédé selon l'invention, pour le rechargement de pièces métalliques pour turboréacteur d'aéronef, ledit rechargement étant réalisé au moyen d'un laser, généré par une buse, chauffant une poudre assurant le rechargement de ladite pièce métallique, caractérisé en ce que l'outillage comporte ;
- une enceinte présentant :
   - une ouverture inférieure au travers de laquelle est introduite une pièce métallique à recharger ;
   - une partie supérieure avec une ouverture ;
- un couvercle mobile recouvrant l'ouverture de la partie supérieure, ledit couvercle mobile présentant un orifice au niveau duquel se positionne la buse pour réaliser le rechargement de la pièce métallique, ledit couvercle étant entrainé en déplacement par la buse observant une trajectoire de rechargement.

Outre les caractéristiques principales qui viennent d'être mentionnées dans le paragraphe précédent, l'outillage selon l'invention peut présenter une ou plusieurs caractéristiques complémentaires parmi les suivantes, considérées individuellement ou selon les combinaisons techniquement possibles :
- le couvercle mobile est réalisé dans un matériau souple, notamment en notamment en feuillards d'aluminium, ou avec des plaques métalliques jointes par un feuillard métallique.
- l'outillage comporte une pièce intermédiaire, positionnée au moins sur la partie supérieure de l'enceinte, présentant un premier rail de guidage et un deuxième rail de guidage apte à guider le déplacement du couvercle mobile.
- la pièce intermédiaire comporte une ouverture en regard de laquelle est disposée la pièce métallique à recharger.
- l'enceinte et la pièce intermédiaire forment un élément monobloc.
- l'outillage comporte des moyens d'étanchéité de l'ouverture inférieure de l'enceinte recevant la pièce métallique à recharger.
- l'enceinte comporte des moyens d'introduction d'un gaz inerte, et en ce qu'il comporte des espaces assurant des fuites de gaz inerte au niveau de l'orifice du couvercle mobile.

L'invention et ses différentes applications seront mieux comprises à la lecture de la description qui suit et à l'examen des figures qui l'accompagnent.

### BREVE DESCRIPTION DES FIGURES

Les figures ne sont présentées qu'à titre indicatif et nullement limitatif de l'invention.

Les figures montrent :
- à la figure 1, déjà décrite, une représentation schématique d'un procédé de l'état de la technique pour le rechargement d'une pale ;
- à la figure 2, une représentation schématique d'un exemple d'outillage apte à associer pour la mise en place d procédé selon l'invention ;
- à la figure 3, une représentation schématique d'une partie assemblée de l'outillage de la figure 2;
- à la figure 4, une représentation schématique en perspective d'un exemple de mise en oeuvre du procédé selon l'invention;
- à la figure 5, une représentation schématique, en coupe, de l'exemple de mise en oeuvre de la figure 4.

### DESCRIPTION DETAILLEE D'AU MOINS UN MODE DE REALISATION DE L'INVENTION

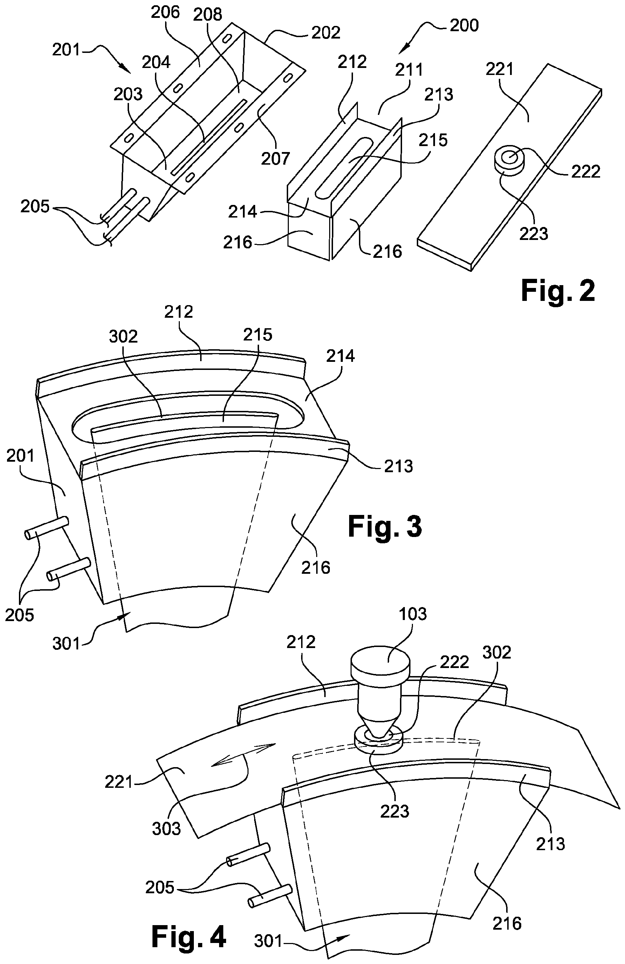

La figure 2 montre un exemple d'outillage 200 selon l'invention.

L'outillage 200 comporte ici :
- une enceinte d'isolation 201, parfois désignée comme "boîte à argon", présentant une partie supérieure 202 ouverte, définissant ainsi une ouverture principale 208 de l'enceinte 201, une partie inférieure 203 présentant une ouverture 204, et recevant des moyens 205 d'introduction d'un gaz inerte. La partie supérieure 202 présente un premier support plan 206 et un deuxième support plan 207 disposés de part et d'autre de l'ouverture 208 ; l'ouverture 204 est destinée à être traversée par une partie de la pièce à recharger, l'enceinte 201 étant alors solidaire de la pièce considérée ;
- une pièce intermédiaire 211, présentant notamment un premier rail de guidage 212 et un deuxième rail de guidage 213 disposés de part et d'autre d'une face supérieure 214 de ladite pièce intermédiaire 211 ; le premier rail de guidage 212 et le deuxième rail de guidage 213 s'étendent sensiblement perpendiculairement à la face supérieure 214 ; la partie supérieure 214 présente une ouverture 215, et des flancs 216. Elle est avantageusement réalisée en matériau souple, par exemple en aluminium ;
- un couvercle mobile 221, de forme sensiblement rectangulaire, réalisé en matériau souple, par exemple en utilisant des feuillards en aluminium, ou des plaques métalliques jointes par un feuillard métallique ; le couvercle mobile 221 présente un orifice 222, disposé sensiblement au centre dudit couvercle mobile ; avantageusement, l'orifice 222 présente un renforcement 223, par exemple de forme cylindrique.

La figure 3 présente un exemple d'assemblage de l'enceinte 201 et de la pièce intermédiaire 211 : les supports plans 206 et 207 servent de surface d'appui à la face supérieure 214 de la pièce intermédiaire 211. Les parois 216 sont positionnées contre l'enceinte 201, de manière à assurer le maintien de la pièce intermédiaire. Une pale 301, qui présente une partie supérieure 302 à réparer, peut ainsi être introduite par l'ouverture 204 de l'enceinte 201 et la partie supérieure 302 est positionnée en regard de l'ouverture 215 afin d'être accessible par le laser émis par la buse 103. Dans une variante de réalisation de l'outillage selon l'invention, l'enceinte 201 et la partie intermédiaire 211 ne forment qu'une pièce monobloc.

La figure 4 montre l'assemblage de la figure 3 complété par le couvercle mobile 221. Celui-ci présente une largeur adaptée à la distance entre les rails de guidage 212 et 213 de manière à pouvoir coulisser entre ces rails de guidage selon un mouvement de translation 303.

Selon le procédé selon l'invention, une fois que l'outillage 200 est disposé et que la pale 301 est insérée dans l'enceinte 201, la buse 103 est amenée au niveau de l'ouverture 222 du couvercle mobile 221. Comme visible à la figure 5, la buse 103 est enfoncée dans l'ouverture 222, et c'est son mouvement, lorsqu'elle parcourt une trajectoire de rechargement, qui entraine en mouvement le couvercle mobile 221, en étant en contact avec le renforcement 223 lorsqu'il est présent. La buse 103 est ainsi introduite dans l'enceinte 201 avec une distance de rechargement variant, au fil des passages successifs pour recharger l'extrémité 302, entre une distance de rechargement minimale 502, typiquement égale à trois millimètres, et une distance de rechargement maximale 503, typiquement égale à trente millimètres.

Comme visible à la figure 5, il existe un jeu 501 entre la buse 103 et certaines parties du contour de l'ouverture 222, qui assure une évacuation progressive du gaz inerte envoyé dans l'enceinte 201. Le couvercle 221 permet de limiter le taux de fuite durant le soudage, en le régulant. L'utilisation d'un gaz plus lourd que l'air (tel que l'argon), ainsi que l'utilisation d'un outillage étanche a niveau de l'ouverture 204, par exemple par l'utilisation de mousses d'isolation, permet d'avoir uniquement une fuite d'argon par débordement au niveau du couvercle mobile 221 en évitant ainsi toute entrée d'air. A titre d'exemple, le débit d'argon au niveau des moyens 205 d'introduction de gaz inerte est de l'ordre de 10 à 20 litres par minute, pour assurer une pression de 5 bars.

## Revendications

1. Procédé de rechargement de pièces métalliques (301) pour turboréacteur d'aéronef, ledit procédé faisant intervenir une buse (103) émettant un faisceau laser, ou un faisceau d'électrons, destiné à chauffer une poudre projetée assurant le rechargement de ladite pièce métallique (301), **caractérisé en ce que** ledit procédé comporte les différentes étapes suivantes :
- mise en position de la pièce métallique (301) à recharger dans une enceinte (201) présentant une partie supérieure (202) avec une ouverture (208) ;
- mise en place d'un couvercle mobile (221) recouvrant l'ouverture (208) de la partie supérieure (202), ledit couvercle mobile (221) présentant un orifice (222) ;
- positionnement de la buse (103) au niveau de l'orifice (222) du couvercle mobile (221);
- introduction d'un gaz inerte dans l'enceinte (201);
- projection de poudres métalliques et émission du faisceau laser assurant le rechargement de la pièce métallique (301);
- **caractérisé par** le déplacement de la buse (103) par rapport à l'enceinte (201), selon une trajectoire de rechargement de la pièce métallique (301), le déplacement de la buse (103) provoquant le déplacement du couvercle mobile (201) sur la face supérieure (202) de l'enceinte (201).

2. Procédé selon la revendication précédente **caractérisé en ce que** le déplacement du couvercle mobile (201) est provoqué par la buse (103) en contact avec un renforcement (223) de l'orifice (222) du couvercle (221) recouvrant la partie supérieure (208).

3. Procédé selon l'une quelconque des revendications précédentes **caractérisé en ce que** la partie supérieure (208) supporte des rails de guidage (212 ; 213), le déplacement du couvercle mobile (221) étant guidé par les rails de guidage (212 ; 213).

4. Procédé selon la revendication précédente **caractérisé en ce qu'**il comporte l'étape supplémentaire consistant à, préalablement à l'étape de mise en place du couvercle mobile (221), mettre en place les rails de guidage (212 ; 213) sur la partie supérieure (208) de l'enceinte (201).

5. Procédé selon l'une quelconque des revendications précédentes **caractérisé en ce que** l'étape de mise en position de la pièce métallique (301) à recharger dans l'enceinte (201) comporte une opération d'introduction, par une ouverture (204) ménagée dans une partie inférieure (203) de l'enceinte (201), de ladite pièce métallique (301).

6. Procédé selon l'une quelconque des revendications précédentes **caractérisé en ce que** la trajectoire de rechargement de la pièce métallique (301) comporte plusieurs allers-retours, la buse (103) présentant une distance de rechargement (502 ; 503) par rapport à la pièce métallique (301) variant au fur et à mesure des allers-retours.

7. Procédé selon la revendication précédente **caractérisé en ce que** la distance de rechargement (502 ; 503) varie de trois millimètres à trente millimètres.

8. Outillage (200), apte à mettre en oeuvre le procédé selon l'une quelconque des revendications précédentes, pour le rechargement de pièces métalliques (301) pour turboréacteur d'aéronef, ledit rechargement étant réalisé au moyen d'un laser, généré par une buse (103), chauffant une poudre assurant le rechargement de ladite pièce métallique (301), **caractérisé en ce que** l'outillage (200) comporte ;
- une enceinte (201) présentant :
- une ouverture inférieure (204) au travers de laquelle est introduite une pièce métallique (301) à recharger ;
- une partie supérieure (202) avec une ouverture (208) ;
- un couvercle mobile (221) recouvrant l'ouverture (208) de la partie supérieure (202), ledit couvercle mobile (221) présentant un orifice (222) au niveau duquel se positionne la buse (103) pour réaliser le rechargement de la pièce métallique (301), **caractérisé par** ledit couvercle (221) étant entrainé en déplacement sur la face supérieure (202) de l'enceinte (201) par la buse (103) observant une trajectoire de rechargement.

9. Outillage (200) selon la revendication précédente **caractérisé en ce que** le couvercle mobile (221) est réalisé dans un matériau souple, notamment en feuillards d'aluminium, ou avec des plaques métalliques jointes par un feuillard métallique.

10. Outillage (200) selon l'une quelconque des revendications 8 ou 9 **caractérisé en ce qu'**il comporte une pièce intermédiaire (211), positionnée au moins sur la partie supérieure (202) de l'enceinte (201), présentant un premier rail de guidage (212) et un deuxième rail de guidage (213) apte à guider le déplacement du couvercle mobile (221).

11. Outillage (200) selon la revendication précédente **caractérisé en ce que** la pièce intermédiaire (211) comporte une ouverture (215) en regard de laquelle est disposée la pièce métallique (301) à recharger.

12. Outillage (200) selon l'une quelconque des revendications 10 à 11 **caractérisé en ce que** l'enceinte (201) et la pièce intermédiaire (211) forment un élément monobloc.

13. Outillage (200) selon l'une quelconque des revendications 8 à 12 **caractérisé en ce qu'**il comporte des moyens d'étanchéité de l'ouverture inférieure (204) de l'enceinte (201) recevant la pièce métallique (301) à recharger.

14. Outillage (200) selon l'une quelconque des revendications 8 à 13 **caractérisé en ce que** l'enceinte (201) comporte des moyens d'introduction (205) d'un gaz inerte, et **en ce qu'**il comporte des espaces (501) assurant des fuites de gaz inerte au niveau de l'orifice (222) du couvercle mobile (221).

## Patentansprüche

1. Nachladeverfahren von Metallstücken (310) für eine Strahlturbine eines Luftfahrzeugs, wobei das genannte Verfahren eine Düse (103) einsetzt, die einen Laserstrahl oder einen Elektronenstrahl ausgibt, der zum Erwärmen eines versprühten Pulvers bestimmt ist, das das Nachladen des genannten Metallstücks (301) gewährleistet, **dadurch gekennzeichnet, dass** das genannte Verfahren die folgenden unterschiedlichen Schritte umfasst:
- Positionierung des Metallstücks (301) zum Nachladen in einer Einfassung (201), die einen oberen Teil (202) mit einer Öffnung (208) aufweist;
- Einsetzen eines mobilen Deckels (221), der die Öffnung (208) des oberen Teils (202) abdeckt, wobei der genannte mobile Deckel (221) ein Loch (222) aufweist;
- Positionierung der Düse (103) an dem Loch (222) des mobilen Deckels (221);
- Einführung eines Inertgases in die Einfassung (201);
- Versprühen von Metallpulver und Ausgabe des Laserstrahls, der das Nachladen des Metallteils (301) gewährleistet;
- **gekennzeichnet durch** die Verschiebung der Düse (103) im Verhältnis zur Einfassung (201) gemäß einer Nachladebahn des Metallstücks (301), wobei die Verschiebung der Düse (103) die Verschiebung des mobilen Deckels (201) auf der oberen Seite (202) der Einfassung (201) hervorruft.

2. Verfahren gemäß dem voranstehenden Anspruch, **dadurch gekennzeichnet, dass** die Verschiebung des mobilen Deckels (201) durch die Düse (103) hervorgerufen wird, die mit einer Verstärkung (223) des Lochs (222) des Deckels (221) in Kontakt ist, der den oberen Teil (208) abdeckt.

3. Verfahren gemäß irgendeinem der voranstehenden Ansprüche, **dadurch gekennzeichnet, dass** der obere Teil (208) Führungsschienen (212; 213) trägt, wobei die Verschiebung des mobilen Deckels (221) durch die Führungsschienen (212; 213) geführt ist.

4. Verfahren gemäß dem voranstehenden Anspruch, **dadurch gekennzeichnet, dass** es den zusätzlichen Schritt umfasst, der darin besteht, vor dem Schritt des Einsetzens des mobilen Deckels (221) die Führungsschienen (212; 213) auf dem oberen Teil (208) der Einfassung (201) einzusetzen.

5. Verfahren gemäß irgendeinem der voranstehenden Ansprüche, **dadurch gekennzeichnet, dass** der Positionierungsschritt des in die Einfassung (201) nachzuladenden Metallstücks (301) eine Einführoperation des genannten Metallstücks (301) durch eine Öffnung (204) umfasst, die in einem unteren Teil (203) der Einfassung (201) ausgespart ist.

6. Verfahren gemäß irgendeinem der voranstehenden Ansprüche, **dadurch gekennzeichnet, dass** die Nachladebahn des Metallstücks (301) mehrere Hin- und Rückwege umfasst, wobei die Düse (103) eine Nachladeentfernung (502; 503) im Verhältnis zum Metallstück (310) aufweist, das in Abhängigkeit von den Hin- und Rückwegen variiert.

7. Verfahren gemäß dem voranstehenden Anspruch, **dadurch gekennzeichnet, dass** die Nachladeentfernung (502; 503) von drei Millimetern bis dreißig Millimeter variiert.

8. Werkzeug (200), das geeignet ist, das Verfahren gemäß irgendeinem der voranstehenden Ansprüche für das Nachladen von Metallstücken (301) für eine Strahlturbine eines Luftfahrzeugs umzusetzen, wobei das genannte Nachladen mittels eines Lasers realisiert ist, der durch eine Düse (103) erzeugt wird, die ein Pulver erwärmt, das das Nachladen des genannten Metallstücks (301) gewährleistet, **dadurch gekennzeichnet, dass** das Werkzeug (200) umfasst:
- eine Einfassung (201), die aufweist:
∘ eine untere Öffnung (204), durch die ein nachzuladendes Metallstück (301) eingeführt wird
∘ einen oberen Teil (202) mit einer Öffnung (208);
- einen mobilen Deckel (221), der die Öffnung (208) des oberen Teils (202) abdeckt, wobei der genannte mobile Deckel (221) ein Loch (222) aufweist, an dem die Düse (103) positioniert ist, um das Nachladen des Metallstücks (301) zu realisieren,
**gekennzeichnet durch** den genannten Deckel (221), der in Verschiebung auf der oberen Seite (202) der Einfassung (201) durch die Düse (103) angetrieben ist, die eine Nachladebahn einhält.

9. Werkzeug (200) gemäß dem voranstehenden Anspruch, **dadurch gekennzeichnet, dass** der mobile Deckel (221) aus einem elastischen Material, insbesondere Aluminiumblech, oder mit Metallplatten realisiert ist, die durch ein Metallblech verbunden sind.

10. Werkzeug (200) gemäß irgendeinem der Ansprüche 8 oder 9, **dadurch gekennzeichnet, dass** es ein Zwischenstück (211) umfasst, das wenigstens auf dem oberen Teil (202) der Einfassung (201) positioniert ist, der eine erste Führungsschiene (212) und eine zweite Führungsschiene (213) aufweist, die geeignet ist, die Verschiebung des mobilen Deckels (221) zu führen.

11. Werkzeug (200) gemäß dem voranstehenden Anspruch, **dadurch gekennzeichnet, dass** das Zwischenstück (211) eine Öffnung (215) umfasst, der gegenüber das nachzuladende Metallstück (301) angeordnet ist.

12. Werkzeug (200) gemäß irgendeinem der Ansprüche 10 bis 11, **dadurch gekennzeichnet, dass** die Einfassung (201) und das Zwischenstück (211) ein Element aus einem Stück formen.

13. Werkzeug (200) gemäß irgendeinem der Ansprüche 8 bis 12, **dadurch gekennzeichnet, dass** es Abdichtmittel der unteren Öffnung (204) der Einfassung (201) umfasst, die das nachzuladende Metallstück (301) aufnimmt.

14. Werkzeug (200) gemäß irgendeinem der Ansprüche 8 bis 13, **dadurch gekennzeichnet, dass** die Einfassung (201) Einführmittel (205) eines Inertgases umfasst und dass es Räume (501) umfasst, die Inertgaslecks an dem Loch (222) des mobilen Deckels (221) gewährleisten.

## Claims

1. A method for hard-surfacing metal parts (301) for an aircraft turbofan, said method involving a nozzle (103) emitting a laser beam or an electron beam, which is to heat a sprayed powder for hard-surfacing said metal part (301), said method comprising the various following steps:
- positioning the metal part (301) to be hard-surfaced in an enclosure (201) having a top portion (202) with an opening (208);
- positioning a mobile cover (221) covering the opening (208) of the top portion (202), said mobile cover (221) having an opening (222);
- positioning the nozzle (103) at the opening (222) of the mobile cover (221);
- feeding an inert gas into the enclosure (201);
- spraying metal powders and emitting the laser beam for hard-surfacing the metal part (301); **characterised in that** said method comprises the following step:
- moving the nozzle (103) relative to the enclosure (201), along a path for hard-surfacing the metal part (301), the movement of the nozzle (103) causing the movement of the mobile cover (201) on the top surface (202) of the enclosure (201).

2. The method according to the preceding claim, **characterised in that** the movement of the mobile cover (201) is caused by the nozzle (103) contacting a reinforcement (223) of the opening (222) of the cover (221) covering the top portion (208).

3. The method according to any of the preceding claims, **characterised in that** the top portion (208) supports guide rails (212; 213), the movement of the mobile cover (221) being guided by the guide rails (212; 213).

4. The method according to the preceding claim, **characterised in that** it comprises the further step of, prior to the step of positioning the mobile cover (221), positioning the guide rails (212; 213) on the top portion (208) of the enclosure (201).

5. The method according to any of the preceding claims, **characterised in that** the step of positioning the metal part (301) to be hard-surfaced in the enclosure (201) comprises a step of feeding, through an opening (204) provided in the bottom portion (203) of the enclosure (201), said metal part (301).

6. The method according to any of the preceding claims, **characterised in that** the path for hard-surfacing the metal part (301) comprises several back and forth motions, the nozzle (103) having a hard-surfacing distance (502; 503) relative to the metal part (301) which varies as the back and forth motions proceed.

7. The method according to the preceding claim, **characterised in that** the hard-surfacing distance (502; 503) varies from three millimetres to thirty millimetres.

8. A tool (200), able to implement the method according to any of the preceding claims, for hard-surfacing metal parts (301) for an aircraft turbofan, said hard-surfacing being carried out by means of a laser, generated by a nozzle (103), heating a powder for hard-surfacing said metal part (301), **characterised in that** the tool (200) comprises:
- an enclosure (201) having:
- a bottom opening (204) through which a metal part (301) to be hard-surfaced is fed;
- a top portion (202) with an opening (208);
- a mobile cover (221) covering the opening (208) of the top portion (202), said mobile cover (221) having an opening (222) at which the nozzle (103) is positioned to carry out the hard-surfacing of the metal part (301),
said tool being **characterised in that** said cover (221) is driven into movement, on the top surface of the enclosure, by the nozzle (103) following a path for hard-surfacing.

9. The tool (200) according to the preceding claim, **characterised in that** the mobile cover (221) is made of a soft material, especially of aluminium strips, or with metal plates joined by a metal strip.

10. The tool (200) according to any of claims 8 or 9, **characterised in that** it comprises an intermediate part (211), positioned at least on the top portion (202) of the enclosure (201), having a first guide rail (212) and a second guide rail (213) able to guide the movement of the mobile cover (221).

11. The tool (200) according to the preceding claim, **characterised in that** the intermediate part (211) comprises an opening (215) facing which the metal part (301) to be hard-surfaced is positioned.

12. The tool (200) according to any of claims 10 to 11, **characterised in that** the enclosure (201) and the intermediate part (211) form a one-piece element.

13. The tool (200) according to any of claims 8 to 12, **characterised in that** it comprises means for sealing the bottom opening (204) of the enclosure (201) receiving the metal part (301) to be hard-surfaced.

14. The tool (200) according to any of claims 8 to 13, **characterised in that** the enclosure (201) comprises means for feeding (205) an inert gas, and that it comprises gaps (501) for leaking the inert gas at the opening (222) of the mobile cover (221).
